# EUROPÄISCHE PATENTSCHRIFT

(11) **EP 4 309 033 B1**
(45) Veröffentlichungstag und Bekanntmachung des Hinweises auf die Patenterteilung: **11.02.2026**
(21) Anmeldenummer: 21844986.6
(22) Anmeldetag: 22.12.2021
(51) Int. Cl.: G06F 8/65, B60R 16/02

(54) **COMPUTERIMPLEMENTIERTES VERFAHREN UND VORRICHTUNG ZUR AUTOMATISIERTEN AKTUALISIERUNG EINER KOMMUNIKATIONSEINHEIT EINER STEUEREINHEIT EINES FAHRZEUGS**
COMPUTER-IMPLEMENTED METHOD AND DEVICE FOR THE AUTOMATED UPDATE OF A COMMUNICATION UNIT OF A CONTROL UNIT OF A VEHICLE
PROCÉDÉ ET DISPOSITIF MIS EN OEUVRE PAR ORDINATEUR POUR LA MISE À JOUR AUTOMATISÉE D'UNE UNITÉ DE COMMUNICATION D'UNE UNITÉ DE COMMANDE D'UN VÉHICULE

(30) Priorität: 18.03.2021 DE 102021202658
(43) Veröffentlichungstag der Anmeldung: 24.01.2024
(73) Patentinhaber: Schaeffler Technologies AG & Co. KG, 91074 Herzogenaurach (DE)
(72) Erfinder: MADER, Ralph, 80687 München (DE); SIEBER, Rudolf, 80687 München (DE); KASTNER, Stefan, 80687 München (DE); KOLB, Benjamin, 80687 München (DE)
(74) Vertreter: Schaeffler Technologies
(86) Internationale Anmeldenummer: PCT/EP2021/087341
(87) Internationale Veröffentlichungsnummer: WO 2022/194417

(56) Entgegenhaltungen:
- US-A1- 2020 274 927
- AUTOSAR: "Layered Software Architecture", AUTOSAR R20-11, 30 November 2020 (2020-11-30), pages 1 - 171, XP055901843, Retrieved from the Internet <URL:https://www.autosar.org/fileadmin/user_upload/standards/classic/20-11/AUTOSAR_EXP_LayeredSoftwareArchitecture.pdf> [retrieved on 20220316]

## Beschreibung

Die vorliegende Offenbarung betrifft ein computer-implementiertes Verfahren und eine Vorrichtung zur automatisierten Aktualisierung einer Kommunikationseinheit einer Steuereinheit eines Fahrzeugs, wobei die Steuereinheit mehrere Software Cluster aufweist, wobei jedes Software Cluster eine unabhängige Softwareeinheit ist, die mindestens eine Software-Komponente, ein Manifest und eine lokale Laufzeitumgebung aufweist. Ein Software Cluster kann auch als PART bezeichnet werden.

Die Software Cluster innerhalb der Steuereinheit des Fahrzeugs sind beispielsweise dazu ausgebildet, unterschiedliche Funktionen der Steuerung des Fahrzeugs, wie beispielsweise der Steuerung einer Brennkraftmaschine oder einer elektrischen Maschine oder der Überwachung von Temperaturen oder der Regelung von unterschiedlichen Größen, auszuführen. Ein einzelnes Software Cluster führt demgemäß eine spezifische Aufgabe innerhalb der Steuereinheit aus, wobei hierzu dem Software Cluster Daten aus dem Fahrzeug bereitgestellt werden können. Zusätzlich kann das Software Cluster mittels der bereitgestellten Daten Berechnungen durchführen und diese wiederum anderen Software Clustern zur Weiterverarbeitung bereitstellen. Dementsprechend ist es notwendig, dass Eingangsdaten, welche der Steuereinheit bereitgestellt werden, den entsprechenden Software Clustern zur Verfügung gestellt werden, sowie Ausgangsdaten, welche von den Software Clustern ausgegeben werden, den entsprechenden nachgeschalteten Software Clustern bereitgestellt werden bzw. den Komponenten des Fahrzeugs zur jeweiligen Regelung und/oder Steuerung bereitgestellt werden. Zu diesem Zweck weist die Steuereinheit eine Kommunikationseinheit auf, die die Kommunikation zwischen den Software Clustern untereinander abwickelt und zusätzlich für die entsprechende Kommunikation der Daten von außerhalb der Steuereinheit zuständig ist. Innerhalb einer AUTOSAR Umgebung / Architektur werden bei derartig eingebetteten Systemen diese Kommunikationseinheiten herkömmlich manuell konfiguriert. Mittels dieser manuellen Konfiguration werden die Schnittstellen der einzelnen Software Cluster zueinander und die Schnittstellen bezüglich Eingangs- bzw. Ausgangsdaten derart konfiguriert, dass im Betrieb des Fahrzeugs bzw. im Betrieb der Steuereinheit die Kommunikation zwischen den einzelnen Software Clustern abgewickelt werden kann.

Während des Betriebs der Steuereinheit bzw. während des Betriebs des Fahrzeugs kann es jedoch notwendig sein, beispielsweise aufgrund von Änderungen der Gesetzeslage, eine Aktualisierung mindestens eines Software Clusters vornehmen zu müssen bzw. es kann notwendig sein, zusätzlich ein neues Software Cluster auf die Steuereinheit aufzuspielen. In derartigen Situationen muss dementsprechend die Kommunikationseinheit für jede Kommunikation innerhalb der Software Cluster und dementsprechend auch für die Kommunikation mit dem aktualisierten bzw. dem neuen Software Cluster aktualisiert werden. Diese Aktualisierung der Kommunikationseinheit erfolgt herkömmlich manuell. Diese manuelle Aktualisierung der Kommunikationseinheit ist aufwendig und kann aufgrund der zunehmenden Komplexität von Steuereinheiten von Fahrzeugen und insbesondere aufgrund zunehmender Aktualisierungen und Veränderungen innerhalb der Steuereinheiten aufwendig und komplex sein.

US2020/274927A1 beschreibt die Verwaltung und Aktualisierung der Netzwerk-Topologie eines Fahrzeugs, bei dem verschiedene Netzwerk-Deskriptordateien in ein einheitliches Format konvertiert und daraus steuereinheit-spezifische Dateien oder Code generiert werden. Autosar: "Layered Software Architecture",Autosar R20-11, stellt die geschichtete Software-Architektur der AUTOSAR Classic Platform dar, die Software Cluster mittels Binary Manifests und eines Software Cluster Connection (SwCluC) Moduls für unabhängige Updates und flexible Kommunikation verbindet.

Die Aufgabe der vorliegenden Offenbarung ist es daher, ein computer-implementiertes Verfahren und eine Vorrichtung zu schaffen, mit dem bzw. mit der eine automatisierte Aktualisierung einer Kommunikationseinheit einer Steuereinheit eines Fahrzeugs ermöglicht wird.

Die Aufgabe wird gelöst durch die Merkmale der unabhängigen Patentansprüche. Vorteilhafte Herausgestaltungen der vorliegenden Offenbarung sind in den abhängigen Ansprüchen angegeben.

Gemäß der vorliegenden Offenbarung weist ein computer-implementiertes Verfahren zur automatisierten Aktualisierung einer Kommunikationseinheit einer Steuereinheit eines Fahrzeugs die nachfolgend aufgezählten Schritte auf. Die Steuereinheit weist mehrere Software Cluster auf, wobei jedes Software Cluster eine unabhängige Softwareeinheit ist, die mindestens eine Software-Komponente, ein Manifest und eine lokale Laufzeitumgebung aufweist. Ein Software Cluster ist dabei eine unabhängige Softwareeinheit, die beispielsweise eine Steuerfunktion mittels Daten aus dem Fahrzeug oder eine Regelfunktion beispielsweise der Antriebseinheit des Fahrzeugs oder eine Rechenoperation zur Lieferung von Ausgabedaten ausführt, wobei das Software Cluster beispielsweise zur Steuerung des Fahrzeugs und/oder zur Regelung einer Komponente des Fahrzeugs vorgesehen ist. Das Software Cluster kann auch als PART bezeichnet werden. Die Software-Komponente des Software Cluster ist dazu ausgebildet, die entsprechende Funktionalität auszuführen und bereitzustellen. Das Manifest ist ein Teil einer AUTOSAR Classic konformen Implementierung, welches die Konfiguration des AUTOSAR Classic Software Systems unterstützt und das jeweilige Software Cluster definiert und dadurch die Kommunikation zwischen den Software Cluster ermöglicht. Die lokale Laufzeitumgebung des Software Cluster stellt alle Funktionalitäten zur Verfügung, die zur Ausführung der jeweiligen Software-Komponente benötigt werden.
- Bereitstellen der Steuereinheit des Fahrzeugs, die eine Mehrzahl von Software Clustern, eine Kommunikationseinheit und eine Multi Device Connector Routine aufweist, wobei die Kommunikationseinheit für die Abwicklung einer Kommunikation zwischen den Software Clustern ausgebildet ist und hierzu ein eigenes Manifest und eine Konfigurationstabelle aufweist. Die bereitgestellte Steuereinheit des Fahrzeugs ist dementsprechend mittels der Mehrzahl von Software Clustern dazu ausgebildet das Fahrzeug bzw. Teile des Fahrzeugs im Betrieb zu steuern. Mittels der Kommunikationseinheit kann die Kommunikation zwischen den einzelnen Software Clustern abgewickelt werden. Damit die Kommunikation zwischen den einzelnen Software Clustern vorteilhaft einfach abgewickelt werden kann, weist die Kommunikationseinheit ein eigenes Manifest und eine Konfigurationstabelle auf. In der Konfigurationstabelle ist die entsprechende Zuordnung der einzelnen Software Cluster zueinander und der entsprechenden Datenflüsse hinterlegt. In der AUTOSAR Umgebung kann die Kommunikationseinheit auch als Multi Device Bridge bezeichnet werden. Die Multi Device Connector Routine ist eine Softwareroutine, die in der Steuereinheit, beispielsweise in einer Datenverarbeitungseinheit, in einem Mikrocontroller, hinterlegt ist.
- Aktualisierung mindestens eines der Software Cluster, einer Mehrzahl der Software Cluster oder Hinzufügen/Entfernen mindestens eines Software Clusters. Gemäß diesem Schritt wird die Steuereinheit dahingehend verändert, dass eines der Software Cluster beispielsweise upgedatet wird oder ein Software Cluster hinzugefügt oder entfernt wird. Aufgrund einer derartigen Veränderung der Steuereinheit ist es notwendig die Kommunikationseinheit anzupassen, so dass nachdem das Software Cluster aktualisiert bzw. hinzugefügt oder verändert wurde, die Kommunikation zwischen den Software Clustern reibungslos ablaufen kann.
- Ausführung der Multi Device Connector Routine. Die Multi Device Connector Routine ist eine Ablaufsoftware, die ausgeführt wird, sobald die Steuereinheit dahingehend verändert wird, dass mindestens eines der Software Cluster aktualisiert wird, eine Mehrzahl der Software Cluster aktualisiert wird oder mindestens eines der Software Cluster hinzugefügt oder entfernt wird. Mittels der Multi Device Connector Routine werden die nachfolgenden Schritte ausgeführt:
   - Mindestens das Manifest des aktualisierten Software Clusters, der aktualisierten Software Cluster oder des mindestens einen neu hinzugefügten oder des mindestens einen entfernten Software Clusters wird eingelesen. Gemäß einer Ausführungsform können auch alle Manifeste oder ein Teil der Manifeste der Software Cluster der Steuereinheit eingelesen werden.
   - Mindestens ein neues Manifest wird für die Kommunikationseinheit mittels des mindestens einen eingelesenen Manifests des aktualisierten Software Clusters, der aktualisierten Software Cluster, des mindestens einen neu hinzugefügten beziehungsweise des mindestens einen entfernten Software Clusters generiert. Die Multi Device Connector Routine generiert in diesem Verfahrensschritt ein neues Manifest für die Kommunikationseinheit, wobei dabei die Informationen aus den eingelesenen Manifesten bzw. aus mindestens einem eingelesenen Manifest herangezogen werden. Dabei können die neu hinzugefügten Informationen aus dem neuen Software Cluster für die Kommunikationseinheit bzw. für die Konfiguration der Kommunikationseinheit genutzt werden.
   - Mindestens eine neue Konfigurationstabelle wird für die Kommunikationseinheit generiert. Ähnlich wie im vorangegangenen Schritt wird neben dem neuen Manifest für die Kommunikationseinheit auch die entsprechende Konfigurationstabelle für die Kommunikationseinheit neu generiert, so dass die neuen Informationen, welche mit der Veränderung des neuen Software Cluster der Steuereinheit zugeführt wurden, innerhalb der Konfigurationstabelle abgebildet werden können, so dass die Kommunikation via die Kommunikationseinheit mittels dem neuen Manifest und mittels der neuen Konfigurationstabelle vorgenommen werden können.
   - Flashen des mindestens einen neuen Manifests der Kommunikationseinheit und der mindestens einen neuen Konfigurationstabelle, wodurch die Kommunikationseinheit der Steuereinheit des Fahrzeugs aktualisiert wird. Die Multi Device Connector Routine, welche beispielsweise in dem Bootloader der Steuereinheit ausgeführt wird, kann dementsprechend mittels der offenbarten Schritte die Kommunikationseinheit automatisiert aktualisieren, so dass dies nicht mehr manuell durchgeführt werden muss. Wird der Steuereinheit ein neues Software Cluster hinzugefügt, wird anschließend automatisiert die Multi Device Connector Routine ausgeführt, wodurch die Kommunikationseinheit der Steuereinheit automatisiert aktualisiert wird, so dass die Kommunikationsabwicklung zwischen den verschiedenen Software Clustern mit dem neuen Software Cluster
   vorteilhaft schnell und einfach wieder hergestellt werden kann, so dass die Stillstandzeiten wesentlich reduziert werden können. Gemäß der vorliegenden Offenbarung ist es nicht mehr notwendig die entsprechende Kommunikationseinheit manuell neu zu konfigurieren. Die automatisierte Aktualisierung ermöglicht demgemäß eine vorteilhaft schnelle und unabhängige Aktualisierung der Kommunikationseinheit.

Gemäß einer Ausführungsform weist die Steuereinheit eine Mehrzahl von virtuellen Steuereinheiten auf, wobei jede der virtuellen Steuereinheiten jeweils eine Mehrzahl von Software Cluster und eine eigene Kommunikationseinheit aufweist. Die Architektur der Steuereinheit gemäß dieser Ausführungsform ist derart ausgestaltet, dass mindestens zwei virtuelle Steuereinheiten die Steuereinheit bilden. Mit dieser Ausführungsform wird die Kommunikation zwischen den Software Clustern innerhalb der eigenen virtuellen Steuereinheit und die Kommunikation zwischen den Software Clustern der verschiedenen virtuellen Steuereinheiten mittels den Kommunikationseinheiten abgewickelt. In anderen Worten, die einzelnen Software Cluster jeder einzelnen virtuellen Steuereinheiten können miteinander via der eigenen entsprechenden Kommunikationseinheit der jeweiligen virtuellen Steuereinheit kommunizieren und zusätzlich können die Software Cluster der verschiedenen virtuellen Steuereinheiten mittels der jeweiligen Kommunikationseinheiten kommunizieren.

Es ist beispielsweise denkbar, dass ein Software Cluster eine Information aus einem anderen Software Cluster aus einer anderen virtuellen Steuereinheit benötigt. Dementsprechend muss die Kommunikation zwischen diesen Software Clustern über die Kommunikationseinheiten der entsprechenden virtuellen Steuereinheiten abgewickelt werden. Gemäß dieser Ausführungsform wird bei der Ausführung der Multi Device Connector Routine mindestens eine der Kommunikationseinheiten aktualisiert. Gemäß einer weiteren Ausführungsform werden bei dem Ausführen der Multi Device Connector Routine alle Kommunikationseinheiten der Steuereinheit aktualisiert, also jede Kommunikationseinheit jeder virtuellen Steuereinheit. Wird beispielsweise ein Software Cluster einer virtuellen Steuereinheit aktualisiert, dann wird automatisiert die Multi Device Connector Routine ausgeführt, so dass mindestens die Kommunikationseinheit der entsprechenden virtuellen Steuereinheit aufgrund der Aktualisierung des Software Cluster ebenfalls aktualisiert wird, so dass die Kommunikation innerhalb der virtuellen Steuereinheit wieder wie gewohnt stattfinden kann. Greift beispielsweise das neu aktualisierte Software Cluster auf weitere Software Cluster zurück, welche in einer anderen virtuellen Steuereinheit hinterlegt sind, dann kann es notwendig sein, zusätzlich auch die Kommunikationseinheiten der weiteren virtuellen Steuereinheit aufgrund der Aktualisierung eines Software Cluster der anderen virtuellen Steuereinheit auch zu aktualisieren. Dementsprechend würde die Aktualisierung der Kommunikationseinheiten in Abhängigkeit des aktualisierten Software Cluster bzw. in Abhängigkeit eines hinzugefügten oder gelöschten Software Cluster entsprechend angepasst, so dass jeweils alle notwendigen Kommunikationseinheiten aktualisiert werden, so dass anschließend wieder die gesamte Kommunikation innerhalb der Steuereinheit vorteilhaft durchgeführt werden kann. Mittels der Multi Device Connector Routine kann dies vollkommen automatisiert durchgeführt werden, so dass keine manuelle Konfiguration der Kommunikationseinheit aufgrund einer Aktualisierung eines Software Cluster notwendig ist. Dementsprechend können Stillstandzeiten und Kosten eingespart werden.

Gemäß einer Ausführungsform weist die Steuereinheit einen geteilten Speicher auf, und die Kommunikation zwischen den Software Clustern der verschiedenen virtuellen Steuereinheiten wird mittels den Kommunikationseinheiten via den geteilten Speicher abgewickelt Der geteilte Speicher (shared memory) dient den verschiedenen virtuellen Steuereinheiten als gemeinsamer Speicher. Gemäß dieser Ausführungsform wird auch die Ausführung der Multi Device Connector Routine via den geteilten Speicher abgewickelt. Der geteilte Speicher bietet eine vorteilhaft einfache, robuste und schnelle Lösung, um die Kommunikation zwischen den verschiedenen virtuellen Steuereinheiten abzuwickeln und auch um die Ausführung der Multi Device Connector Routine zur Aktualisierung der Kommunikationseinheiten vorteilhaft schnell und einfach auszuführen.

Gemäß einer Ausführungsform wird die Steuereinheit durch eine Mehrzahl von Mikrocontrollern gebildet, die jeweils einen Teil der Steuereinheit bilden und jeweils mindestens eine Mehrzahl von den Software Clustern und jeweils die Kommunikationseinheit aufweisen, wobei die Kommunikation zwischen den Software Clustern innerhalb der jeweiligen Mikrocontroller und zwischen den Software Clustern der verschiedenen Mikrocontroller mittels der Kommunikationseinheit abgewickelt wird, wobei mittels des Ausführens der Multi Device Connector Routine mindestens eine der Kommunikationseinheiten aktualisiert wird. Eine Steuereinheit kann gemäß dieser Ausführungsform mehrere Mikrocontroller aufweisen. Beispielsweise ist ein Mikrocontroller dazu ausgebildet einen gewissen Bereich des Fahrzeugs zu steuern und der andere Mikrocontroller ist beispielsweise dazu ausgebildet einen anderen Bereich des Fahrzeugs zu steuern. Trotzdem kann es notwendig sein, dass die Mikrocontroller untereinander kommunizieren, um Daten bzw. Informationen auszutauschen. Dementsprechend weisen die jeweiligen Mikrocontroller jeweils eine Mehrzahl von Software Clustern auf, die dementsprechend jeweils untereinander in dem jeweiligen Mikrocontroller mittels der Kommunikationseinheit miteinander kommunizieren und zusätzlich mittels der jeweiligen Kommunikationseinheiten zwischen den Software Clustern der jeweiligen Mikrocontroller kommunizieren. Wird dementsprechend beispielsweise ein Software Cluster eines Mikrocontrollers ausgetauscht, aktualisiert oder gelöscht oder hinzugefügt, muss dementsprechend die jeweilige Kommunikationseinheit des entsprechenden Mikrocontrollers mittels der Multi Device Connector Routine aktualisiert werden. Benötigt beispielsweise das aktualisierte Software Cluster zusätzlich auch Informationen aus dem weiteren Mikrocontroller auf, bzw. ist es dazu ausgebildet mit mindestens einem Software Cluster des weiteren Mikrocontrollers zu kommunizieren, dann kann es notwendig sein, dass zusätzlich auch die Kommunikationseinheit des oder der weiteren Mikrocontroller aktualisiert wird. Dies würde dementsprechend ebenso mittels der Multi Device Connector Routine durchgeführt werden. Die entsprechende automatisierte Aktualisierung der Kommunikationseinheiten kann dementsprechend in Abhängigkeit des hinzugefügten Software Cluster bzw. der aktualisierten oder des aktualisierten Software Cluster durchgeführt werden.

Gemäß einer Ausführungsform weist jeder der Mikrocontroller eine jeweilige Multi Device Connector Routine auf, wobei mittels des Ausführens der jeweiligen Multi Device Connector Routine mindestens eine der Kommunikationseinheiten des entsprechenden Mikrocontrollers aktualisiert wird. Die jeweilige Multi Device Connector Routine kann in den jeweiligen Bootloadern des Mikrocontrollers ausgeführt werden. Jeder der Mikrocontroller kann beispielsweise zusätzlich eine Mehrzahl von virtuellen Steuereinheiten aufweisen, die wiederum jeweils eine Kommunikationseinheit zur Kommunikation der jeweiligen Software Cluster aufweisen. Dementsprechend kann mittels der Multi Device Connector Routine die jeweilige Kommunikationseinheit in Abhängigkeit von dem aktualisierten oder veränderten Software Cluster automatisiert aktualisiert werden. Mittels des Bootloaders wird der Softwarecode im Flashspeicher aktualisiert. Die Aktualisierung erfolgt im Flashspeicher des jeweiligen Mikrocontrollers, worauf lediglich von dem jeweiligen Mikrocontroller aus zugegriffen werden kann. Weshalb jeder Mikrocontroller seinen eigenen Bootloader aufweist und dementsprechend die Multi Device Connector Routine in jedem Bootloader ausgeführt wird.

Gemäß einer Ausführungsform stehen die Mikrocontroller mittels eines high speed serial links (HSSL), einer LAN Verbindung oder mittels eines Bussystems miteinander in Verbindung und die Kommunikation zwischen den Software Clustern der unterschiedlichen Mikrocontroller wird mittels der Kommunikationseinheiten via den high speed serial link, der LAN Verbindung oder das Bussystems abgewickelt. Der high speed serial link, die LAN Verbindung oder die Bussystems stellen eine vorteilhaft zuverlässige, robuste und schnelle Verbindung für die notwendige Kommunikation zwischen den Mikrocontrollern dar, so dass die Steuereinheit vorteilhaft robust das Fahrzeug steuern kann. Gemäß dieser Ausführungsform wird zusätzlich die Ausführung der mindestens einen Multi Device Connector Routine via den high speed serial links, der LAN Verbindung oder das Bussystem abgewickelt, sofern die Ausführung der Multi Device Connector Routine die Anpassung einer Kommunikationseinheit, welche auf einem der anderen Mikrocontrollern angeordnet ist, notwendig macht.

Gemäß einer Ausführungsform weist die Steuereinheit eine Over-the-air-Schnittstelle auf, wobei mittels dieser Over-the-air-Schnittstelle Daten der Steuereinheit bereitgestellt werden, wobei das Aktualisieren mindestens eines der Software Cluster, einer Mehrzahl der Software Cluster oder das Hinzufügen/Entfernen mindestens eines der Software Cluster mittels der dadurch bereitgestellten Daten durchgeführt wird. Gemäß einer weiteren Ausführungsform weist die Steuereinheit selbst nicht die Over-the-air-Schnittstelle auf, sondern die Daten werden der Steuereinheit mittels einer Over-the-air-Schnittstelle beispielsweise einer anderen Vorrichtung bereitgestellt. Mittels der Over-the-air-Schnittstelle können beispielsweise Daten mittels einer W-LAN Verbindung oder mittels eines Mobilfunknetzes an die Steuereinheit übertragen werden. Es ist beispielsweise denkbar, dass der Hersteller eines Fahrzeugs bzw. der Hersteller der Steuereinheit die entsprechende Steuereinheit aktualisieren möchte, indem beispielsweise ein neues Software Cluster der Steuereinheit hinzugefügt wird. Dieses Software Cluster kann dementsprechend mittels der entsprechenden Over-the-air-Schnittstelle der Steuereinheit zugeführt werden, wodurch das Software Cluster in die Steuereinheit integriert wird. Dementsprechend kann die Hinzufügung des Software Cluster mittels der Over-the-air-Schnittstelle anschließend die Ausführung der Multi Device Connector Routine auslösen, wodurch die Kommunikationseinheit der Steuereinheit aktualisiert wird. Ein Nutzer der Steuereinheit bzw. ein Nutzer des Fahrzeugs würde dementsprechend keine Veränderung in der Steuereinheit feststellen bzw. es würde sich keine Veränderung im Fahrverhalten des Fahrzeugs ergeben, da die Steuereinheit beispielsweise im Hintergrund aktualisiert werden kann.

Gemäß einer Ausführungsform wird das Aktualisieren mindestens eines der Software Cluster, einer Mehrzahl der Software Cluster oder das Hinzufügen/Entfernen mindestens eines Software Clusters und/oder das Ausführen der Multi Device Connector Routine in Abhängigkeit von sicherheitsrelevanten und/oder zeitrelevanten Ereignissen ausgeführt. In anderen Worten, die Aktualisierung der Kommunikationseinheit bzw. das Hinzufügen oder Verändern eines der Software Clusters wird lediglich dann durchgeführt, wenn die Situation, in welcher sich die Steuereinheit bzw. das Fahrzeug befindet, dies erlaubt. Ist das Fahrzeug beispielsweise in Betrieb bzw. die Steuereinheit in Betrieb bzw. insbesondere in einem kritischen bzw. hochrelevanten Zustand, dann sollte das Update eines Software Cluster bzw. eine Aktualisierung der Kommunikationseinheit vermieden werden, so dass das Fahrzeug bzw. die Steuereinheit uneingeschränkt weiterbetrieben werden kann. Dementsprechend wird gemäß dieser Ausführungsform zunächst abgefragt, ob sich die Steuereinheit in einem sicherheitsrelevanten oder in einem zeitrelevanten Zustand befindet, oder dass derartige Ereignisse kurz bevorstehen, bevor ein Software Cluster aktualisiert bzw. hinzugefügt oder entfernt wird und die entsprechende Multi Device Connector Routine zur Aktualisierung der Kommunikationseinheit ausgeführt wird. Dadurch kann sichergestellt werden, dass die Steuereinheit sämtliche Fahrsituationen ausführen kann und gleichzeitig wird die Aktualisierung der Steuereinheit dann durchgeführt, wenn die Steuereinheit in einem entsprechenden Modus sich befindet. Dadurch können sicherheitskritische Anforderungen vorteilhaft einfach und genau erfüllt werden, wobei gleichzeitig die Steuereinheit automatisch aktualisiert wird, indem mindestens eines der Software Cluster aktualisiert, hinzugefügt oder entfernt wird und die Kommunikationseinheit entsprechend automatisiert aktualisiert wird.

Gemäß einer Ausführungsform erfolgt die Aktualisierung der Kommunikationseinheit in Abhängigkeit eines Safety Levels und / oder eines Security Levels. Gemäß dieser Ausführungsformen wird die für die Aktualisierung der Kommunikationseinheit notwendige Kommunikation innerhalb der Steuereinheit in Safety relevante Anteile und nicht Safety relevante Anteil bzw. in Security relevante Anteile und nicht Security relevante Anteile aufgeteilt werden. Dementsprechend können jene Anteile zuerst abgearbeitet werden, die die höchsten Sicherheitsanforderungen aufweisen.

Gemäß einer Ausführungsform werden mittels der Software Cluster Komponenten einer Vorrichtung gesteuert und/oder Eingangsdaten aus Sensoren der Vorrichtung ausgewertet. Gemäß einer weiteren Ausführungsform ist es auch denkbar, dass Software Cluster oder eines der Software Cluster Daten aus einem anderen Software Cluster weiterverarbeitet, daraus Ausgangsdaten generiert, die wiederum zur Steuerung einer Komponente innerhalb der Vorrichtung herangezogen werden. Die Software Cluster übernehmen dementsprechend Steuerungs- bzw. Regelungsaufgaben, um innerhalb des eingebetteten Systems die Vorrichtung wie vorgesehen zu steuern.

Gemäß einer Ausführungsform wird mittels der Vorrichtung ein Fahrzeug, vorzugsweise ein Antriebsstrang des Fahrzeugs oder ein Teil des Fahrzeugs, vorzugsweise ein Teil eines Antriebsstrangs des Fahrzeugs gesteuert und/oder die Eingangsdaten aus den Sensoren des Fahrzeugs, vorzugsweise des Antriebsstrangs werden gemäß dieser Ausführungsform mittels der Software Cluster der Steuereinheit ausgewertet. In anderen Worten, die Software Cluster der Steuereinheit sind dazu vorgesehen, einen Antriebsstrang, beispielsweise einen Hybridantriebsstrang oder einen voll elektrifizierten Antriebsstrang eines Fahrzeugs, zu steuern bzw. Sensordaten aus Sensoren des Antriebsstrangs auszuwerten und beispielsweise dem Fahrer eines entsprechenden Fahrzeugs Daten bereitzustellen bzw. mittels der Eingangsdaten aus den Sensoren wiederum Ausgangsdaten zu ermitteln, die im Antriebsstrang zur entsprechenden Steuerung oder Regelung bereitgestellt werden.

Gemäß einer Ausführungsform weist die Steuereinheit als mindestens eines der Software Cluster ein eingefrorenes Software Cluster auf. Das eingefrorene (frozen) Software Cluster unterscheidet sich von den weiteren Software Cluster dadurch, dass es als "frozen" klassifiziert ist und nicht verändert werden kann. Derartige eingefrorene Software Cluster sind gemäß einer Ausführungsform dazu ausgebildet hochsicherheitsrelevante Funktionen oder ähnliches auszuführen. Dementsprechend können derartige Software Cluster nicht verändert oder entfernt werden. Zudem berücksichtigt gemäß einer Ausführungsform die Multi Device Connector Routine diese Software Cluster indem deren Kommunikationsschnittstellen innerhalb der Kommunikationseinheit nicht aktualisiert bzw. verändert werden.

Gemäß einem weiteren Aspekt der vorliegenden Offenbarung wird eine Steuereinheit angegeben, die zur automatisierten Aktualisierung einer Kommunikationseinheit der Steuereinheit des Fahrzeugs ausgebildet ist, wobei die Steuereinheit mehrere Software Cluster aufweist, wobei jedes Software Cluster eine unabhängige Softwareeinheit ist, die mindestens eine Software Komponente, ein Manifest und eine lokale Laufzeitumgebung aufweist, wobei die Kommunikationseinheit für eine Abwicklung einer Kommunikation zwischen den Software Clustern ausgebildet ist und hierzu ein eigenes Manifest aufweist, wobei die Steuereinheit dazu ausgebildet ist, eines der vorgenannten Verfahren auszuführen. Gemäß einem weiteren Aspekt wird ein Fahrzeug angegeben, das die Steuereinheit aufweist.

Ausführungsbeispiele und Weiterbildungen des Verfahrens gemäß der vorliegenden Offenbarung sind in den Figuren dargestellt und werden anhand der nachfolgenden Beschreibung näher erläutert.

Es zeigen:
- Figur 1: Eine schematische Darstellung einer Architektur einer Steuereinheit gemäß einer ersten Ausführungsform,
- Figur 2: ein erstes Ablaufdiagramm des Multi Device Connectors in der Master Rolle
- Figur 3: ein zweites Ablaufdiagramm des Multi Device Connector in der Slave Rolle.

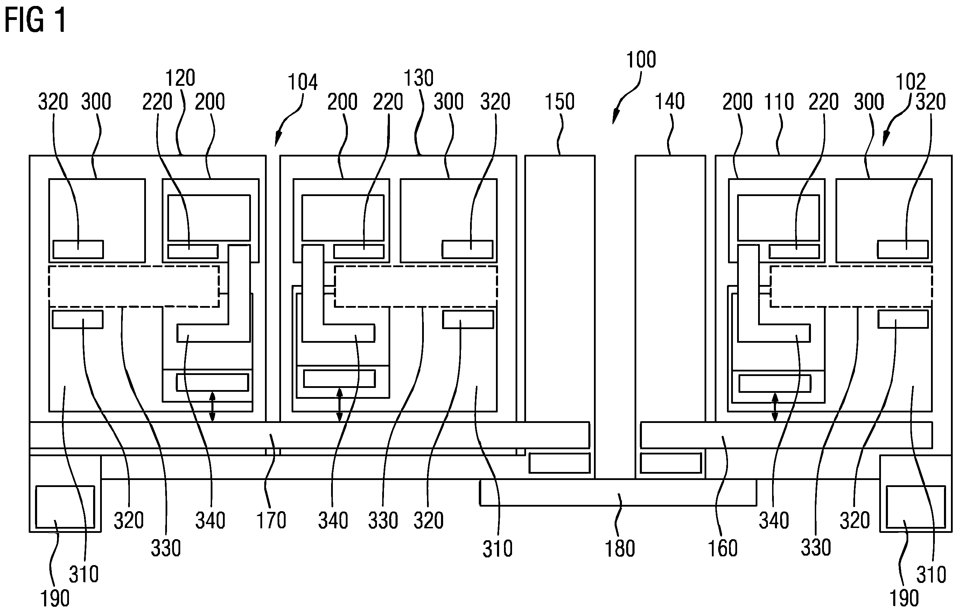

Die Figur 1 zeigt eine Steuereinheit 100. Die Steuereinheit 100 weist einen ersten Mikrocontroller 102 und einen zweiten Mikrocontroller 104 auf. Es ist auch denkbar, dass die Steuereinheit 100 weitere Mikrocontroller aufweist. Der erste Mikrocontroller 102 und der zweite Mikrocontroller 104 sind mittels eines high speed serial links (HSSL) 180 miteinander verbunden. Mittels des high speed serial links 180 erfolgt die Kommunikation zwischen dem ersten Mikrocontroller 102 und dem zweiten Mikrocontroller 104. Der erste Mikrocontroller 102 weist eine erste virtuelle Steuereinheit 110 auf. Der zweite Mikrocontroller 104 weist eine zweite virtuelle Steuereinheit 120 und eine dritte virtuelle Steuereinheit 130 auf. Dementsprechend weist der zweite Mikrocontroller 104 eine Mehrzahl an virtuellen Steuereinheiten auf, während der erste Mikrocontroller 102 lediglich eine einzige virtuelle Steuereinheit 110 aufweist. Der erste Mikrocontroller 102 weist zusätzlich einen ersten virtuellen Steuereinheit Manager 140 auf. Der zweite Mikrocontroller 104 weist zusätzlich einen zweiten Steuereinheit Manager 150 auf. Die virtuellen Steuereinheit-Manager 140, 150 sind dazu ausgebildet das Hoch- Runterfahren der virtuellen Steuereinheiten 110, 120 zu steuern. Zudem sind die Steuereinheit-Manager 140, 150 als Master mittels geteilter Ressourcen, vorliegend mittels der HSSL Schnittstelle miteinander verknüpft, wobei die Zugriffe auf die virtuellen Steuereinheiten 110, 120 verwaltet werden.

Der erste Mikrocontroller 102 weist einen ersten Speicher 160 auf. Der zweite Mikrocontroller 104 weist einen zweiten geteilten Speicher 170 auf, wobei sich die zweite virtuelle Steuereinheit 120 und die dritte virtuelle Steuereinheit 130 den zweiten geteilten Speicher 170 als geteilten Speicher (shared memory) teilen. Die Kommunikation zwischen der zweiten virtuellen Steuereinheit 120 und der dritten virtuellen Steuereinheit 130 erfolgt dementsprechend via den zweiten geteilten Speicher 170. In dem ersten Mikrocontroller 102 und dem zweiten Mikrocontroller 104 ist jeweils eine Multi Device Connector Routine 190 hinterlegt, die mittels eines Bootloaders ausgeführt werden kann. Jede virtuelle Steuereinheit 110, 120, 130 weist jeweils eine Kommunikationseinheit 200 auf. Jede der Kommunikationseinheiten 200 weist ein eigenes Manifest 220 und eine Konfigurationstabelle auf. Die Kommunikationseinheiten 200 sind jeweils für die Abwicklung der Kommunikation innerhalb der jeweiligen virtuellen Steuereinheiten 110, 120, 130 und zusätzlich zur Abwicklung der Kommunikation zwischen den jeweiligen virtuellen Steuereinheiten 110, 120 und 130 vorgesehen. Jede der virtuellen Steuereinheiten 110, 120, 130 weist zudem eine Mehrzahl von Software Cluster 300 auf. Jedes Software Cluster 300 ist eine unabhängige Softwareeinheit, die mindestens eine Software-Komponente, ein Manifest und eine lokale Laufzeitumgebung aufweist. Das Software Cluster 300 kann auch als PART bezeichnet werden. Jedes Software Cluster 300 ist dazu ausgebildet, eine entsprechende Funktionalität der Steuereinheit 100 beispielsweise zur Steuerung eines Antriebsstrangs eines Fahrzeugs abzubilden bzw. auszuführen. Jede virtuelle Steuereinheit 110, 120, 130 weist zusätzlich ein Host-Software Cluster 310 auf. Die Host-Software Cluster 310 stellen die Basissoftware (z.B.: OS-Tasks, Kommunikationsstacks, zentraler Fehlerspeicher etc.) für die Software Cluster 300 der virtuellen Steuereinheiten 110, 120 und 130 zur Verfügung. Jede der virtuellen Steuereinheiten 110, 120, 130 weist zusätzlich einen AR Flex Layer 330 und einen Protocol Data Unit Router 340 auf. Der AR Flex Layer 330 ist die Verbindung über das Manifest zwischen den Software Clustern 300. Der Protocol Data Unit Router 340 ist dazu ausgebildet die Kommunikationspakete (PDUs) auf die verschiedenen Busse (CAN, LIN, Ethernet) einschließlich shared memory und HSSL zu verteilen.

Wird beispielsweise ein Software Cluster 300 innerhalb der ersten virtuellen Steuereinheit 110 aktualisiert bzw. wird ein neues Software Cluster 300 innerhalb der ersten virtuellen Steuereinheit 110 hinzugefügt, dann wird dementsprechend die Multi Device Connector Routine 190 mittels eines Bootloaders des ersten Mikrocontrollers 102 ausgeführt, wodurch die Kommunikationseinheit 200 der ersten virtuellen Steuereinheit 110 automatisiert aktualisiert wird, so dass die Kommunikation innerhalb der ersten virtuellen Steuereinheit 110 abgewickelt werden kann. Weist beispielsweise dieses aktualisierte Software Cluster 300 zusätzlich Schnittstellen zu anderen Software Cluster 300 in dem zweiten Mikrocontroller 104 auf, beispielsweise zu einem Software Cluster 300 innerhalb der zweiten virtuellen Steuereinheit 120 des zweiten Mikrocontrollers 102, dann kann es notwendig sein, zusätzlich auch die Kommunikationseinheit 200 dieser virtuellen Steuereinheit 120 zu aktualisieren. Dementsprechend wird die Multi Device Connector Routine 190 des zweiten Mikrocontrollers 104 im entsprechenden Bootloader des zweiten Mikrocontrollers 104 ausgeführt, so dass die Kommunikationseinheit 200 der zweiten virtuellen Steuereinheit 120 zusätzlich aktualisiert wird. Dementsprechend können alle relevanten Kommunikationseinheiten 200 der Steuereinheit 100 aktualisiert werden, so dass die gesamte Abwicklung der Kommunikation innerhalb der Steuereinheit 100 wieder vorteilhaft robust ablaufen kann, ohne dass manuelle Kommunikationsschnittstellen neu definiert und aktualisiert werden müssten.

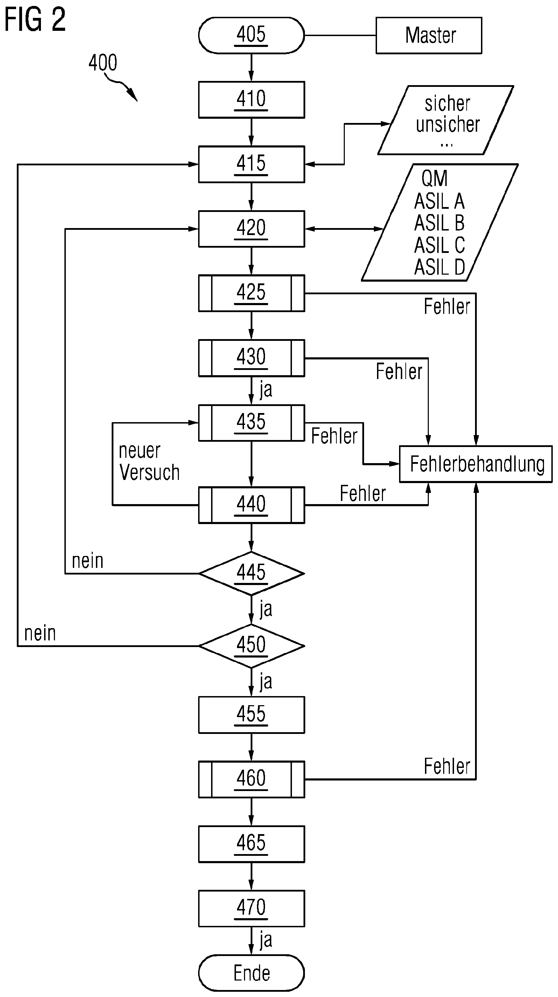

Die Figur 2 zeigt ein erstes Ablaufdiagramm 400, welches die Ausführung der Multi Device Connector Routine 190 in einer virtuellen Steuereinheit 110, 120, 130 darstellt, in der ein Software Cluster 300 aktualisiert wurde. Die Multi Device Connector Routine 190 wird dementsprechend in der Master Rolle ausgeführt, also Ausführung in dem Mikrokontroller, bei dem mindestens eine virtuelle Steuereinheit 110, 120, 130 eine Aktualisierung mindestens eines Software Clusters 300 erfahren hat. Der Start des Ablaufdiagramms 400 ist mit dem Startblock 405 dargestellt. In dem ersten Schritt 410 werden die im Flash hinterlegten Konfigurationstabellen im RAM bereitgestellt. Die Bearbeitung erfolgt anschließend in Abhängigkeit der Safety Integrity Stufe (QM-ASIL-D) und der Security Stufe (Secure/Unsecure). Dies ist mittels des zweiten Schritts 415, des dritten Schritts 420, des achten Schritts 445 und des neunten Schritts 450 schematisch dargestellt. Die Abfrage erfolgt dabei mittels Schleifen, die die unterschiedlichen Safety Stufen / Security level durchläuft. Dies ist in dem Ablaufdiagramm 400 auch schematisch dargestellt. Anschließend werden in dem vierten Schritt 425 Manifest-Informationen von anderen virtuellen Steuereinheiten angefordert. Anschließend wird im fünften Schritt 430 die Protocol Data Unit Nutzlast Struktur berechnet.

Die Ermittlung der Nutzlast der Protocol Data Units erfolgt wie folgt: Zunächst wird eine Liste von Sendedaten, die an eine andere virtuelle Steuereinheit zu versenden ist, erzeugt. Anschließend wird für jede vorkonfigurierte PDU der Kategorie Sende, Empfang, Zeitraster, Safety-Integrity-Stufe, Security Level, zunächst in der Liste der Sendedaten geprüft, ob diese zur PDU Kategorie passt, wenn ja und dies nicht der erste Eintrag der Nutzlasttabelle ist, wird der Eintrag aus der Sendedatenliste in die Sende PDU Nutzlasttabelle verschoben, wenn nein wird hinterlegt, dass mindestens ein Eintrag in der Nutzlasttabelle für diese PDIU-Kategorie vorhanden ist. Ist der vorkonfigurierte Nutzlastbereich einer PDU mit Sendedaten gefüllt, wird zur nächsten vorkonfigurierten PDU der gleichen Kategorie gewechselt und das Befüllverfahren wird fortgesetzt. Das Verfahren wird dabei so lange wiederholt, bis alle zu versendenden Daten auf PDUs verteilt sind oder das Verfahren wird mit einem Fehlercode beendet, wenn der vorkonfigurierte Nutzlastbereich der PDUs ausgeschöpft ist, es aber noch weitere Sendedaten auf PDUs zu verteilen gäbe. Dadurch wir die PDU Nutzlaststruktur ermittelt.

Anschließend wird im sechsten Schritt 435 die ermittelte PDU Nutzlast Struktur mit den anderen virtuellen Steuereinheiten 110, 120, 130 ausgetauscht. Anschließend erfolgt im siebten Schritt 440 eine Überprüfung der PDU Nutzlastkonfiguration über alle virtuellen Steuereinheiten 110, 120, 130. Sollte in einem der vorausgegangenen Schritte ein Fehler aufgetreten sein, wird eine Fehlerbehandlung getriggert, die das Verfahren bis zu einer maximalen Fehlertoleranzschwelle wiederholt. Im fehlerfreien Fall wird anschließend im elften Schritt 460 und zwölften Schritt 465, nachdem auf mögliche Slaves gewartet wurde (zehnter Schritt 455), das Manifest der Multi Device Bridge berechnet. Alle von der Multi Device Bridge versendeten Daten werden zu "required Ports" und alle von der Multi Device Bridge empfangenen Daten werden zu "provided Ports" des Manifests. Nachdem das Manifest der Multi Device Bridge berechnet ist und im Flashspeicher persistiert wurde, wird der Verbindungsprozess für Manifeste aller Software Cluster 300 der virtuellen Steuereinheit angestoßen, dies ist in dem Ablaufdiagramm 400 in dem dreihzehnten Schritt 470 schematisch dargestellt. Anschließend endet das erste Ablaufdiagramm 400.

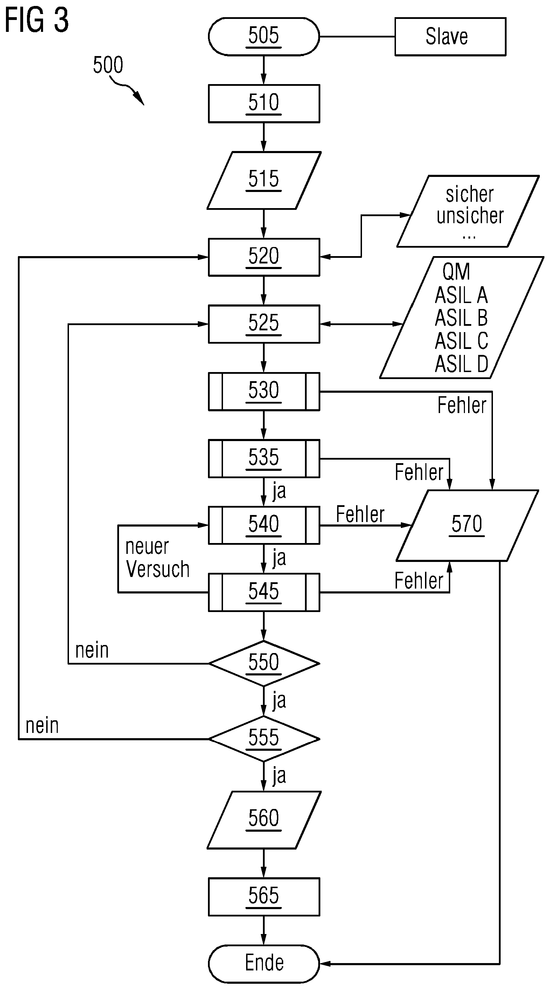

Die Figur 3 zeigt ein zweites Ablaufdiagramm 500, welches die Ausführung der Multi Device Connector Routine 190 in einer virtuellen Steuereinheit 110, 120, 130 darstellt, in der keines der Software Cluster 300 aktualisiert wurde. Die Multi Device Connector Routine 190 wird dementsprechend in der Slave Rolle ausgeführt, also Ausführung in dem Mikrokontroller, der keine Aktualisierung erfahren hat. Der Ablauf ist identisch zu dem Ablauf, der in Figur 2 dargestellt ist. Der Master kontrolliert die Ablaufsteuerung, die Fehlerbehandlung und das Anstoßen der Manifest Erzeugung. Der Slave reagiert darauf durch entsprechendes Setzen seines Zustandsautomaten. Der Start des zweiten Ablaufdiagramms 500 ist mit dem Startblock 505 schematisch dargestellt. Der Slave Mode startet, wenn der Mikrokontroller selbst nicht Master ist und eine entsprechende Anfrage von einem anderen Mikrokontroller erhält. Im ersten Schritt 510 werden die im Flash hinterlegten Konfigurationstabellen im RAM bereitgestellt. Anschließend wird der Konfigurationsstatus auf 2 gesetzt, dies ist im zweiten Schritt 515 dargestellt. Dies bedeutet, dass die Abarbeitung slaveseitig gestartet istDie Bearbeitung erfolgt anschließend in Abhängigkeit der Safety Integrity Stufe (QM-ASIL-D) und der Security Stufe (Secure/Unsecure). Dies ist mittels des dritten Schritts 520, des vierten Schritt 525, des neunten Schritts 550 und des zehnten Schritts 555 schematisch dargestellt. Anschließend werden Manifest-Informationen von anderen Mikrokontrollern angefordert, dies ist mittels des fünften Schritts 530 schematisch dargestellt. Anschließend wird im sechsten Schritt 535 die Protocol Data Unit Nutzlast Struktur berechnet. Anschließend wird im siebten Schritt 540 die ermittelte PDU Nutzlast Struktur mit den anderen virtuellen Steuereinheiten 110, 120, 130 ausgetauscht. Anschließend erfolgt im achten Schritt 545 eine Überprüfung der PDU Nutzlastkonfiguration über alle virtuellen Steuereinheiten 110, 120, 130. Im Fehlerfall wird der Konfigurationsstatus auf 0 gesetzt, dies ist im Block 570 schematisch dargestellt, wodurch dargestellt ist, dass die Abarbeitung slaveseitig mit einem Fehler beendet ist. Sofern alles fehlerfrei durchgeführt werden konnte wird der Konfigurationsstatus auf 1 gesetzt, wodurch dargestellt wird, dass die Abarbeitung slaveseitig erfolgreich beendet ist. Dies ist in dem Ablaufdiagramm 500 mit dem elften Schritt 560 dargestellt, woraufhin der Slave fertig ist, dies ist mit dem zwölften Schritt 565 schematisch dargestellt.

## Patentansprüche

1. Computer-implementiertes Verfahren zur automatisierten Aktualisierung einer Kommunikationseinheit (200) einer Steuereinheit (100) eines Fahrzeugs, die mehrere Software Cluster (300) aufweist, wobei jedes Software Cluster (300) eine unabhängige Softwareeinheit ist, die mindestens eine Software-Komponente, ein Manifest (320) und eine lokale Laufzeitumgebung aufweist, wobei das Verfahren die folgenden Schritte aufweist:
- Bereitstellen der Steuereinheit (100) des Fahrzeugs, die eine Mehrzahl von Software Clustern (300), eine Kommunikationseinheit (200) und eine Multi Device Connector Routine (190) aufweist, wobei die Kommunikationseinheit (200) für eine Abwicklung einer Kommunikation zwischen den Software Clustern (300) ausgebildet ist und hierzu ein eigenes Manifest (220) und eine Konfigurationstabelle, in der eine Zuordnung der einzelnen Software Cluster zueinander und entsprechende Datenflüsse hinterlegt sind, aufweist;
- Aktualisieren mindestens eines der Software Cluster (300), einer Mehrzahl der Software Cluster oder hinzufügen/entfernen mindestens eines Software Clusters (300);
- Ausführen der Multi Device Connector Routine (190), wobei
- mindestens das Manifest (320) des aktualisierten Software Clusters (300), der aktualisierten Software Cluster (300), des mindestens einen neu hinzugefügten Software Clusters (300) bziehungsweise des mindestens einen entfernten Software Clusters (300) eingelesen wird;
- mindestens ein neues Manifest (220) für die Kommunikationseinheit (200) mittels des eingelesenen Manifests (320) des aktualisierten Software Clusters (300), der aktualisierten Software Cluster (300) des mindestens einen neu hinzugefügten Software Clusters (300) beziehungsweise des mindestens einen entfernten Software Clusters (300) generiert wird;
- mindestens eine neue Konfigurationstabelle für die Kommunikationseinheit (200) generiert wird, so dass Informationen, welche mit dem Aktualisieren des mindestens einen Software Clusters der Steuereinheit zugeführt werden, innerhalb der Konfigurationstabelle abgebildet werden, und
- flashen des mindestens einen neuen Manifests (220) der Kommunikationseinheit (200) und der mindestens einen neuen Konfigurationstabelle, wodurch die Kommunikationseinheit (200) der Steuereinheit (100) des Fahrzeugs aktualisiert wird.

2. Computer-implementiertes Verfahren gemäß Anspruch 1, wobei die Steuereinheit (100) eine Mehrzahl von virtuellen Steuereinheiten (110, 120, 130) aufweist und jede der virtuellen Steuereinheiten (110, 120, 130) jeweils eine Mehrzahl von Software Clustern (300) und eine eigene Kommunikationseinheit (200) aufweist, wobei die Kommunikation zwischen den Software Clustern (300) der eigenen virtuellen Steuereinheit (110, 120, 130) und zwischen den Software Clustern (300) der verschiedenen virtuellen Steuereinheiten (110, 120, 130) mittels der Kommunikationseinheiten (200) abgewickelt wird und wobei mittels des Ausführens der Multi Device Connector Routine (190) mindestens eine der Kommunikationseinheiten (200) aktualisiert wird.

3. Computer-implementiertes Verfahren gemäß Anspruch 2, wobei die Steuereinheit (100) einen geteilten Speicher (160) aufweist und die Kommunikation zwischen den Software Clustern (300) der verschiedene virtuellen Steuereinheiten (110, 120, 130) mittels den Kommunikationseinheiten (200) via den geteilten Speicher (160) abgewickelt wird und die Ausführung der Multi Device Connector Routine (190) via den geteilten Speicher (160) abgewickelt wird.

4. Computer-implementiertes Verfahren gemäß einem der vorhergehenden Ansprüche, wobei die Steuereinheit (100) durch eine Mehrzahl von Mikrocontrollern (102, 104) gebildet wird, die jeweils einen Teil der Steuereinheit (100) bilden und jeweils mindestens eine Mehrzahl von den Software Clustern (300) und jeweils die Kommunikationseinheit (200) aufweisen, wobei die Kommunikation zwischen den Software Clustern (300) innerhalb des jeweiligen Mikrocontrollers (102, 104) und zwischen den Software Clustern (300) der verschiedenen Mikrocontrollern (102, 104) mittels der Kommunikationseinheiten (200) abgewickelt wird, wobei mittels des Ausführens der Multi Device Connector Routine (190) mindestens eine der Kommunikationseinheiten (200) aktualisiert wird.

5. Computer-implementiertes Verfahren gemäß Anspruch 4, wobei jeder der Mikrocontroller (102, 104) eine jeweilige Multi Device Connector Routine (190) aufweist, wobei mittels des Ausführens der jeweiligen Multi Device Connector Routine (190) mindestens eine der Kommunikationseinheiten (200) des entsprechenden Mikrocontrollers (102, 104) aktualisiert wird.

6. Computer-implementiertes Verfahren gemäß einem der Ansprüche 4 oder 5, wobei die Mikrokontroller (102, 104) mittels eines High-Speed-Serial-Links (180), einer **LAN** Verbindung oder mittels eines Bussystems miteinander in Verbindung stehen und die Kommunikation zwischen den Software Clustern (300) mittels der Kommunikationseinheiten (200) via den High-Speed-Serial-Link (180), der **LAN** Verbindung oder das Bussystem abgewickelt wird und die Ausführung der mindestens einen Multi Device Connector Routine (190) via den High-Speed-Serial-Link (180), der **LAN** Verbindung oder das Bussystem abgewickelt wird.

7. Computer-implementiertes Verfahren gemäß einem der vorhergehenden Ansprüche, wobei die Steuereinheit (100) eine Over-the-Air-Schnittstelle aufweist und mittels dieser Over-the-air- Schnittstelle Daten der Steuereinheit (100) bereitgestellt werden, wobei das Aktualisieren mindestens eines der Software Cluster (300), einer Mehrzahl der Software Cluster oder das Hinzufügen mindestens eines neuen Software Clusters (300) mittels der dadurch bereitgestellten Daten durchgeführt wird.

8. Computer-implementiertes Verfahren gemäß einem der vorhergehenden Ansprüche, wobei vor dem Aktualisieren mindestens eines der Software Cluster (300), einer Mehrzahl der Software Cluster oder das Hinzufügen mindestens eines neuen Software Clusters (300) und / oder das Ausführen des Multi Device Connectors (190) abgefragt wird, ob sich die Steuereinheit in einem sicherheitsrelevanten oder in einem zeitrelevanten Zustand befindet oder ob ein derartiger sicherheitsrelevanter beziehungsweise zeitrelevanter Zustand kurz bevorsteht, wobei ein sicherheitsrelevanter beziehungsweise zeitrelevanter Zustand des Steuergeräts jeweils ein Zustand ist, der erfordert, dass die Steuereinheit uneingeschränkt weiterbetrieben wird.

9. Computer-implementiertes Verfahren gemäß einem der vorhergehenden Ansprüche, wobei die Aktualisierung der Kommunikationseinheit (200) in Abhängigkeit eines Safety Levels und / oder eines Security Levels erfolgt, wobei bei der Aktualisierung eine für die Aktualisierung der Kommunikationseinheit (200) notwendige Kommunikation innerhalb der Steuereinheit
• in Safety relevante Anteile und nicht Safety relevante Anteil beziehungsweise
in Security relevante Anteile und nicht Security relevante Anteile aufgeteilt wird.

10. Computer-implementiertes Verfahren gemäß einem der vorhergehenden Ansprüche, wobei mittels der Software Cluster (300) Komponenten einer Vorrichtung gesteuert werden und / oder Eingangsdaten aus Sensoren der Vorrichtung ausgewertet werden.

11. Computer-implementiertes Verfahren gemäß Anspruch 9, wobei mittels der Vorrichtung ein Fahrzeug oder ein Teil eines Fahrzeugs, vorzugsweise ein Antriebsstrang oder ein Teil eines Antriebsstrangs gesteuert wird und / oder die Eingangsdaten aus Sensoren des Fahrzeugs, vorzugsweise des Antriebsstrang ausgewertet werden.

12. Steuereinheit (100) zur automatisierten Aktualisierung einer Kommunikationseinheit (200) der Steuereinheit (100) eines Fahrzeugs, die mehrere Software Cluster (300) aufweist, wobei jedes Software Cluster (300) eine unabhängige Softwareeinheit ist, die mindesten eine Software-Komponente, ein Manifest (320) und eine lokale Laufzeitumgebung aufweist, wobei die Kommunikationseinheit (200) für eine Abwicklung einer Kommunikation zwischen den Software Clustern (300) ausgebildet ist und hierzu ein eigenes Manifest (320) und eine Konfigurationstabelle aufweist, wobei in der Konfigurationstabelle eine Zuordnung der einzelnen Software Cluster zueinander und entsprechende Datenflüsse hinterlegt sind, wobei die Steuereinheit (100) dazu ausgebildet ist ein Verfahren gemäß einem der vorhergehenden Ansprüche auszuführen.

## Claims

1. A computer-implemented method for the automated update of a communication unit (200) of a control unit (100) of a vehicle, which has a plurality of software clusters (300), wherein each software cluster (300) is an independent software unit having at least one software component, a manifest (320) and a local runtime environment, the method comprising the following steps:
- providing the control unit (100) of the vehicle, which has a plurality of software clusters (300), a communication unit (200) and a multi-device connector routine (190), wherein the communication unit (200) is designed to handle communication between the software clusters (300) and has therefore its own manifest (220) and a configuration table, in which an assignment of the individual software clusters to one another and corresponding data flows are stored;
- updating at least one of the software clusters (300), a plurality of the software clusters, or adding/removing at least one software cluster (300);
- executing the multi-device connector routine (190), wherein
- at least the manifest (320) of the updated software cluster (300), the updated software cluster (300), the at least one newly added software cluster (300) or the at least one removed software cluster (300) is read in;
- at least one new manifest (220) is generated for the communication unit (200) by means of the read-in manifest (320) of the updated software cluster (300), the updated software cluster (300) of the at least one newly added software cluster (300) or the at least one removed software cluster (300);
- at least one new configuration table is generated for the communication unit (200), so that information supplied to the control unit with the updating of the at least one software cluster is mapped within the configuration table; and
- flashing the at least one new manifest (220) of the communication unit (200) and the at least one new configuration table, thereby updating the communication unit (200) of the control unit (100) of the vehicle.

2. The computer-implemented method according to claim 1, wherein the control unit (100) has a plurality of virtual control units (110, 120, 130) and each of the virtual control units (110, 120, 130) has a plurality of software clusters (300) and its own communication unit (200), wherein the communication between the software clusters (300) of the own virtual control unit (110, 120, 130) and between the software clusters (300) of the different virtual control units (110, 120, 130) is handled by means of the communication units (200), and wherein at least one of the communication units (200) is updated by means of the execution of the multi-device connector routine (190).

3. The computer-implemented method according to claim 2, wherein the control unit (100) has a shared memory (160) and the communication between the software clusters (300) of the different virtual control units (110, 120, 130) is handled by means of the communication units (200) via the shared memory (160) and the execution of the multi-device connector routine (190) is handled via the shared memory (160).

4. The computer-implemented method according to one of the preceding claims, wherein the control unit (100) is formed by a plurality of microcontrollers (102, 104), each forming part of the control unit (100) and each having at least a plurality of the software clusters (300) and each having the communication unit (200), wherein the communication between the software clusters (300) within the respective microcontroller (102, 104) and between the software clusters (300) of the various microcontrollers (102, 104) is handled by means of the communication units (200), wherein at least one of the communication units (200) is updated by means of the execution of the multi-device connector routine (190).

5. The computer-implemented method according to claim 4, wherein each of the microcontrollers (102, 104) has a respective multi-device connector routine (190), wherein by means of executing the respective multi-device connector routine (190) at least one of the communication units (200) of the corresponding microcontroller (102, 104) is updated.

6. The computer-implemented method according to one of claims 4 or 5, wherein the microcontrollers (102, 104) are connected to one another by means of a high-speed serial link (180), a LAN connection, or by means of a bus system and the communication between the software clusters (300) is handled by means of the communication units (200) via the high-speed serial link (180), the LAN connection or the bus system and the execution of the at least one multi-device connector routine (190) is handled via the high-speed serial link (180), the LAN connection or the bus system.

7. The computer-implemented method according to one of the preceding claims, wherein the control unit (100) has an over-the-air interface and data is provided to the control unit (100) by means of this over-the-air interface, wherein updating at least one of the software clusters (300), a plurality of the software clusters or the addition of at least one new software cluster (300) is carried out by means of the data provided thereby.

8. The computer-implemented method according to one of the preceding claims, wherein, before updating at least one of the software clusters (300), a plurality of the software clusters or adding at least one new software cluster (300) and/or executing the multi-device connector (190), it is queried whether the control device is in a safety-relevant or a time-relevant state or whether such a safety-relevant or time-relevant state is imminent, wherein a safety-relevant or time-relevant state of the control unit is in each case a state that requires that the control unit continues to be operated without restriction.

9. The computer-implemented method according to one of the preceding claims, wherein updating the communication unit (200) takes place as a function of a safety level and/or a security level, wherein, during the updating, communication necessary for the updating of the communication unit (200) within the control unit is divided into
• safety-relevant parts and non-safety-relevant parts, or
security-relevant parts and non-security-relevant parts.

10. The computer-implemented method according to one of the preceding claims, wherein components of a device are controlled by means of the software cluster (300) and/or input data from sensors of the device are evaluated.

11. The computer-implemented method according to claim 9, wherein a vehicle or a part of a vehicle, preferably a drive train or a part of a drive train, is controlled by means of the device, and/or the input data from sensors of the vehicle, preferably of the drive train, is evaluated.

12. A control unit (100) for the automated update of a communication unit (200) of the control unit (100) of a vehicle, which has a plurality of software clusters (300), wherein each software cluster (300) is an independent software unit that has at least one software component, a manifest (320) and a local runtime environment, wherein the communication unit (200) is designed to handle communication between the software clusters (300) and has therefore its own manifest (320) and a configuration table, wherein an assignment of the individual software clusters to one another and corresponding data flows are stored in the configuration table, wherein the control unit (100) is designed to execute a method according to one of the preceding claims.

## Revendications

1. Procédé mis en œuvre par ordinateur pour la mise à jour automatisée d'une unité de communication (200) d'une unité de commande (100) d'un véhicule, qui présente plusieurs grappes logicielles (300), dans lequel chaque grappe logicielle (300) est une unité logicielle indépendante, qui présente au moins un composant logiciel, un manifeste (320) et un environnement d'exécution local, le procédé présentant les étapes suivantes :
- fourniture de l'unité de commande (100) du véhicule, qui présente une pluralité de grappes logicielles (300), une unité de communication (200) et une routine de connecteur multi-appareils (190), dans lequel l'unité de communication (200) est conçue pour une réalisation d'une communication entre les grappes logicielles (300) et présente à cet effet son propre manifeste (220) et une table de configuration, dans laquelle sont stockés une affectation des grappes logicielles individuelles les unes aux autres et des flux de données correspondants ;
- mise à jour d'au moins une des grappes logicielles (300), d'une pluralité de grappes logicielles, ou ajout/suppression d'au moins une grappe logicielle (300) ;
- exécution de la routine de connecteur multi-appareils (190), dans lequel
- au moins le manifeste (320) de la grappe logicielle (300) mise à jour, des grappes logicielles (300) mises à jour, de l'au moins une grappe logicielle (300) nouvellement ajoutée ou de l'au moins une grappe logicielle (300) supprimée est lu ;
- au moins un nouveau manifeste (220) est généré pour l'unité de communication (200) par le biais du manifeste (320) lu de la grappe logicielle (300) mise à jour, des grappes logicielles (300) mises à jour de l'au moins une grappe logicielle (300) nouvellement ajoutée ou de l'au moins une grappe logicielle (300) supprimée ;
- au moins une nouvelle table de configuration est générée pour l'unité de communication (200), de sorte que des informations, qui sont amenées à l'unité de commande avec la mise à jour de l'au moins une grappe logicielle, sont représentées au sein de la table de configuration ; et
- la réinitialisation de l'au moins un nouveau manifeste (220) de l'unité de communication (200) et de l'au moins une nouvelle table de configuration, ce qui met à jour l'unité de communication (200) de l'unité de commande (100) du véhicule.

2. Procédé mis en œuvre par ordinateur selon la revendication 1, dans lequel l'unité de commande (100) présente une pluralité d'unités de commande virtuelles (110, 120, 130) et chacune des unités de commande virtuelles (110, 120, 130) présente respectivement une pluralité de grappes logicielles (300) et une unité de communication (200) propre, dans lequel la communication entre les grappes logicielles (300) de l'unité de commande virtuelle (110, 120, 130) propre et entre les grappes logicielles (300) des différentes unités de commande virtuelles (110, 120, 130) est réalisée par le biais des unités de communication (200), et dans lequel au moins une des unités de communication (200) est mise à jour par le biais de l'exécution de la routine de connecteur multi-appareils (190).

3. Procédé mis en œuvre par ordinateur selon la revendication 2, dans lequel l'unité de commande (100) présente une mémoire partagée (160) et la communication entre les grappes logicielles (300) des différentes unités de commande virtuelles (110, 120, 130) est réalisée par le biais des unités de communication (200) par l'intermédiaire de la mémoire partagée (160) et l'exécution de la routine de connecteur multi-appareils (190) est réalisée par l'intermédiaire de la mémoire partagée (160).

4. Procédé mis en œuvre par ordinateur selon l'une quelconque des revendications précédentes, dans lequel l'unité de commande (100) est formée par une pluralité de microcontrôleurs (102, 104), qui forment respectivement une partie de l'unité de commande (100) et présentent respectivement au moins une pluralité de grappes logicielles (300) et respectivement l'unité de communication (200), dans lequel la communication entre les grappes logicielles (300) au sein du microcontrôleur (102, 104) respectif et entre les grappes logicielles (300) des différents microcontrôleurs (102, 104) est réalisée par le biais des unités de communication (200), dans lequel au moins une des unités de communication (200) est mise à jour par le biais de la réalisation de la routine de connecteur multi-appareils (190).

5. Procédé mis en œuvre par ordinateur selon la revendication 4, dans lequel chacun des microcontrôleurs (102, 104) présente une routine de connecteur multi-appareils (190) respective, dans lequel au moins une des unités de communication (200) du microcontrôleur (102, 104) correspondant est mise à jour par le biais de la réalisation de la routine de connecteur multi-appareils (190) respective.

6. Procédé mis en œuvre par ordinateur selon l'une des revendications 4 ou 5, dans lequel les microcontrôleurs (102, 104) sont en liaison les uns avec les autres par le biais d'un lien série à haut débit (180), d'une liaison LAN ou par le biais d'un système de bus et la communication entre les grappes logicielles (300) est réalisée par le biais des unités de communication (200) par l'intermédiaire du lien série à haut débit (180), de la liaison LAN ou du système de bus et l'exécution de l'au moins une routine de connecteur multi-appareils (190) est réalisée par l'intermédiaire du lien série à haut débit (180), de la liaison LAN ou du système de bus.

7. Procédé mis en œuvre par ordinateur selon l'une quelconque des revendications précédentes, dans lequel l'unité de commande (100) présente une interface hertzienne et des données sont fournies à l'unité de commande (100) par le biais de cette interface hertzienne, dans lequel la mise à jour d'au moins une des grappes logicielles (300), d'une pluralité de grappes logicielles ou l'ajout d'au moins une nouvelle grappe logicielle (300) est effectué par le biais des données fournies par celle-ci.

8. Procédé mis en œuvre par ordinateur selon l'une quelconque des revendications précédentes, dans lequel, avant la mise à jour d'au moins une des grappes logicielles (300), d'une pluralité de grappes logicielles ou l'ajout d'au moins une nouvelle grappe logicielle (300) et/ou l'exécution du connecteur multi-appareils (190), il est demandé si l'unité de commande se trouve dans un état pertinent pour la sécurité ou un état pertinent pour le temps ou si un tel état pertinent en termes de sécurité ou pertinent en termes de temps est imminent, dans lequel un état pertinent en termes de sécurité ou pertinent en termes de temps de l'unité de commande est respectivement un état qui nécessite que l'unité de commande continue à être utilisée sans restriction.

9. Procédé mis en œuvre par ordinateur selon l'une quelconque des revendications précédentes, dans lequel la mise à jour de l'unité de communication (200) a lieu en fonction d'un niveau de sûreté et/ou d'un niveau de sécurité, dans lequel, pendant la mise à jour, une communication nécessaire à la mise à jour de l'unité de communication (200) au sein de l'unité de commande
• est répartie en fractions relatives à la sûreté et fractions non relatives à la sûreté ou en fractions relatives à la sécurité et en fractions non relatives à la sécurité.

10. Procédé mis en œuvre par ordinateur selon l'une quelconque des revendications précédentes, dans lequel par le biais des grappes logicielles (300) des composants d'un dispositif sont commandés et/ou des données d'entrée provenant de capteurs du dispositif sont évaluées.

11. Procédé mis en œuvre par ordinateur selon la revendication 9, dans lequel, par le biais du dispositif, un véhicule ou une partie d'un véhicule, de préférence une chaîne cinématique ou une partie d'une chaîne cinématique, est commandé(e) et/ou les données d'entrée provenant de capteurs du véhicule, de préférence de la chaîne cinématique, sont évaluées.

12. Unité de commande (100) pour la mise à jour automatisée d'une unité de communication (200) de l'unité de commande (100) d'un véhicule, qui présente plusieurs grappes logicielles (300), dans lequel chaque grappe logicielle (300) est une unité logicielle indépendante, qui présente au moins un composant logiciel, un manifeste (320) et un environnement d'exécution local, dans lequel l'unité de communication (200) est conçue pour la réalisation d'une communication entre les grappes logicielles (300) et présente à cet effet un manifeste (320) propre et une table de configuration, dans lequel une affectation des grappes logicielles individuelles les unes aux autres et des flux de données correspondants sont stockés dans la table de configuration, dans lequel l'unité de commande (100) est conçue pour exécuter un procédé selon l'une quelconque des revendications précédentes.
